# EUROPEAN PATENT APPLICATION

(11) **EP 3 306 224 A1**
(43) Date of publication of application: **11.04.2018**
(21) Application number: 15893337.4
(22) Date of filing: 27.05.2015
(51) Int. Cl.: F24J 2/40

(54) **SOLAR HEAT COLLECTION DEVICE AND PREHEATING METHOD OF HEAT COLLECTION TUBE**

(71) Applicant: Chiyoda Corporation, Kanagawa 220-8765 (JP)
(72) Inventor: YUASA, Minoru, Yokohama-shi Kanagawa 220-8765 (JP)
(74) Representative: Schröer, Gernot H.
(86) International application number: PCT/JP2015/065272
(87) International publication number: WO 2016/189703

(57) **Abstract**

A solar thermal collector 8 includes: a heat collecting tube 12 in which a heat medium is caused to flow; a reflecting plate 13 having a parabolic cross section that concentrates sunlight Ls to the heat collecting tube 12; and a rotating device that rotates the heat collecting tube 12 and the reflecting plate 13 around a rotational shaft 31. The rotating device rotates the heat collecting tube 12 and the reflecting plate 13, when preheating the heat collecting tube 12 before the heat medium is introduced, such that an angle θs of the sunlight Ls relative to the ground and an angle θa of an axis of symmetry As of the reflecting plate 13 relative to the ground are different.

## Description

### [TECHNICAL FIELD]

The present invention relates to a solar thermal collector that heats a heat medium flowing in a heat collecting tube by collecting sunlight.

### [BACKGROUND ART]

Solar thermal power generation systems are known that generate electric power by collecting sunlight to a heat collecting tube using a reflecting mirror so as to heat a heat medium flowing in the heat collecting tube, generating steam using the heated heat medium, and rotating a steam turbine. The cost of installing solar thermal power generation systems is lower than that of photovoltaic power generation systems. In addition, solar thermal power generation systems can generate electricity on a 24-hour basis by collecting heat. In the related art, solar thermal power generation systems that use oil as a heat medium are proposed (see, for example, patent document 1).

Recently, molten salt has attracted attention as a heat medium for use in solar thermal power generation systems. Molten salt has a high boiling point. With the use of molten salt, the operating temperature can be relatively high and power generating efficiency is improved by generating high-temperature steam.

Molten salt is solidified at about 250°C. If the temperature of the heat collecting tube is relatively low when molten salt is run into the heat collecting tube at a startup or after a maintenance activity, therefore, the molten salt is deprived of heat by the heat collecting tube and could be solidified. For this reason, it is necessary to preheat the heat-collecting tube to a predetermined temperature or higher before molten salt is run to the heat-collecting tube.

One conceivable method to preheat the heat-collecting tube is to induce an electric current in the heat-collecting tube. By inducing an electric current, the Joule heat can warm the heat-collecting tube.

[patent document 1] JP2014-102013

### [SUMMARY OF THE INVENTION]

However, the preheating method described above of inducing an electric current in the heat-collecting tube has a drawback in that it requires an extremely large electric power and increases the cost.

The present invention has been made in view of the foregoing circumstances, and a purpose of the invention is to provide a technology adapted for solar thermal collectors capable of preheating a heat-collecting tube at a low cost.

In order to resolve the foregoing problems, a solar-thermal collector according to one embodiment of the present invention includes: a heat collecting tube in which a heat medium is caused to flow; a reflecting plate having a parabolic cross section that collects sunlight to the heat collecting tube; and a rotating device that rotates the heat collecting tube and the reflecting plate around a rotational shaft. The rotating device rotates the heat collecting tube and the reflecting plate, when preheating the heat collecting tube before the heat medium is introduced, such that an angle of the sunlight relative to the ground and an angle of an axis of symmetry of the reflecting plate relative to the ground are different.

The rotating device may rotate the heat collecting tube and the reflecting plate, when preheating the heat collecting tube before the heat medium is introduced, such that an angle difference between the angle of the sunlight and the angle of the axis of symmetry of the reflecting plate differ is a predetermined angle difference.

The rotating device may rotate the heat collecting tube and the reflecting plate, when preheating the heat collecting tube before the heat medium is introduced, such that an angle difference between the angle of the sunlight and the angle of the axis of symmetry of the reflecting plate differ varies within a predetermined angle range.

Another embodiment of the present invention relates to a preheating method of a heat collecting tube included in a solar thermal collector in which a heat medium is caused to flow, the solar thermal collector further including a reflecting plate having a parabolic cross section that concentrates sunlight to the heat collecting tube. The preheating method includes: rotating the heat collecting tube and the reflecting plate such that an angle of the sunlight relative to the ground and an angle of an axis of symmetry of the reflecting plate relative to the ground are different; and condensing the sunlight to the heat collecting tube by using the reflecting plate.

Optional combinations of the aforementioned constituting elements, and implementations of the invention in the form of methods, apparatuses, and systems may also be practiced as additional modes of the present invention.

According to the present invention, the heat-collecting tube can be preheated at a low cost.

### [BRIEF DESCRIPTION OF THE DRAWINGS]

FIG. 1 is a diagram to explain a solar thermal power generation power system according to an embodiment of the present invention;
Fig. 2 is a diagram to explain a solar thermal collector according to the embodiment of the present invention;
Fig. 3 is a schematic perspective view to explain the solar thermal collector;
Figs. 4A and 4B are diagrams to explain a method of preheating the heat-collecting tube according to the embodiment of the present invention;
Fig. 5 is a graph showing an exemplary relationship between the angle difference and the light collection level ratio; and
Fig. 6 is a diagram to explain a method of preheating the heat collecting tube according to another embodiment of the present invention.

### [MODE FOR CARRYING OUT THE INVENTION]

The same or equivalent constituting elements and members shown in the drawings shall be denoted by the same reference numerals, and duplicative explanations will be omitted appropriately. The dimension of members in the drawings shall be enlarged or reduced as appropriate to facilitate understanding. Those of the members that are not material to the description of the embodiments are omitted in the drawings.

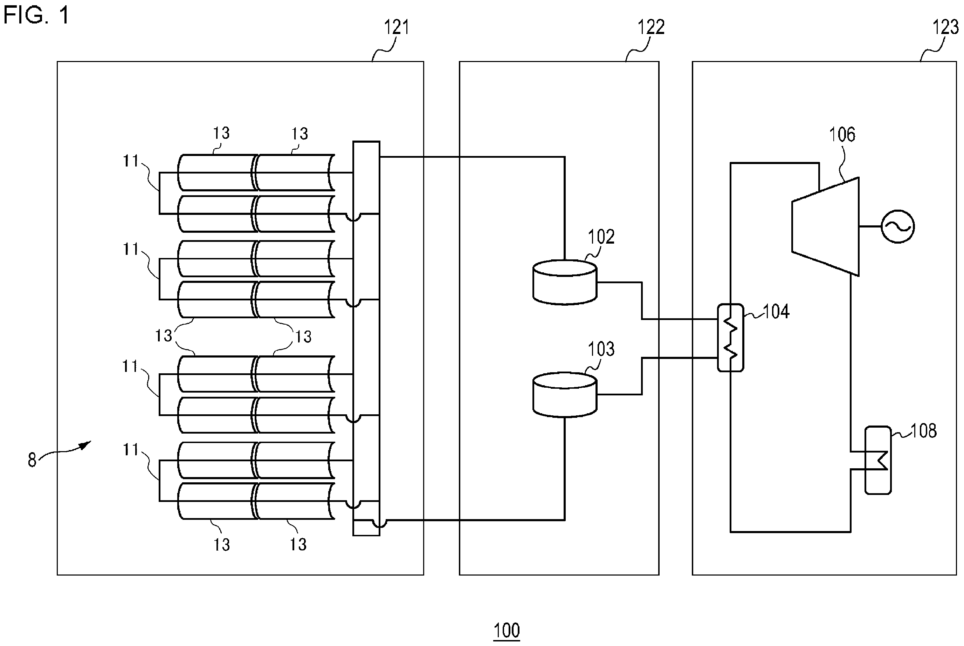

Fig. 1 is a diagram to explain a solar thermal power generation system 100 according to an embodiment of the present invention. The solar thermal power generation system 100 includes a light collection area 121, a heat storage area 122, and a power generation area 123.

The light collection area 121 is comprised mainly of a solar thermal collector 8. The solar thermal collector 8 is provided with a heat medium channel 11 comprised of a plurality of heat-collecting tubes in which the heat medium is caused to flow, and a plurality of reflecting plates 13 that collect sunlight to the heat-collecting tubes so as to heat the heat medium. The heated heat medium is delivered to the heat storage area 122.

The heat storage area 122 is comprised mainly of a hot tank 102 and a cold tank 103. Storing the heat of the heated heat medium in the hot tank 102 enables generating electric power when it is necessary. For example, it will be possible to generate electric power at night or when the weather is bad during the day.

The power generation area 123 includes a steam generator 104, a steam turbine generator 106, and a steam condenser 108. The steam generator 104 generates a steam by exchanging heat between the cooling water and the heated heat medium, and the steam turbine generator 106 rotates the turbine with the steam. The rotation generates electric power. The steam condenser 108 returns the steam into the cooling water.

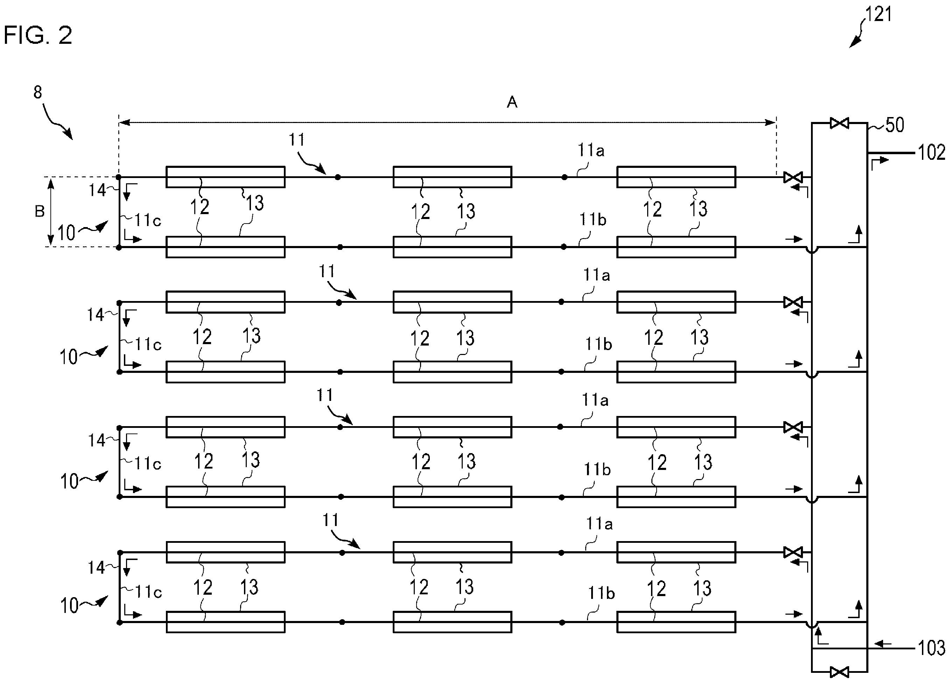

Fig. 2 is a diagram to explain the solar thermal collector 8 according to the embodiment of the present invention. As shown in Fig. 2, the solar thermal collector 8 includes a plurality of (4 in the case of Fig. 1) light collecting units 10 and a connecting channel 50. Each light condensing unit 10 includes a heat medium channel 11 and a plurality of reflecting plates 13.

Each heat medium channel 11 is formed in a U shape and is comprised of long straight parts 11a and 11b parallel to each other, and a short straight part 11c connecting ends of the long straight parts 11a and 11b. Each of the long straight parts 11a and 11b is comprised of a plurality of heat collecting tubes 12 arranged in a straight line. The short straight part 11c is comprised of a connecting pipe 14. The length A of each of the long straight parts 11a, 11b may be about 100∼200 m. The length of each of the heat collecting tubes 12 may be about 10∼20 m. The long straight part 11a may be comprised of 10∼20 heat collecting tubes 12. The length of the short straight part 11c may be 20∼30 mm.

Molten salt as a heat medium to receive solar heat flows in the heat collecting tubes 12 in the heat medium channel 11. Molten heat has a higher boiling point than synthetic oil used in solar-thermal collectors in the related art and so can be heated to a higher temperature. This increases the power generation efficiency of the solar thermal power generation system 100. Meanwhile, molten salt is solidified at about 250°C. During an operation, molten salt is heated by the solar heat and so is not basically solidified. If the temperature of the heat collecting tubes 12 is relatively low when molten salt is run into the heat collecting tubes 12 at a startup or after a maintenance activity, however, the molten salt could be deprived of heat by the heat collecting tubes 12 and solidified. This embodiment addresses this by preheating the heat collecting tubes 12 to a predetermined temperature or higher before running molten salt into the heat collecting tubes 12. The method of preheating the heat collecting tubes 12 will be described later.

The connecting channel 50 is a circular channel and is connected to each heat medium channel 11. The connecting channel 50 is also connected to the hot tank 102 and the cold tank 103 of the heat storage area 122. Therefore, each heat medium channel 11 is connected to the hot tank 102 and the cold tank 103 via the connecting channel 50. The heat medium flows from the cold tank 103 into the connecting channel 50. The heat medium flowing in the connecting channel 50 is run to the long straight part 11a of each heat medium channel 11. The heat medium heated by passing through the heat collecting tubes 12 of the long straight part 11a flows into the long straight part 11b via the connecting pipe 14. The heat medium heated by passing through the heat collecting tubes 12 of the long straight part 11b returns to the connecting channel 50 and flows into the hot tank 102.

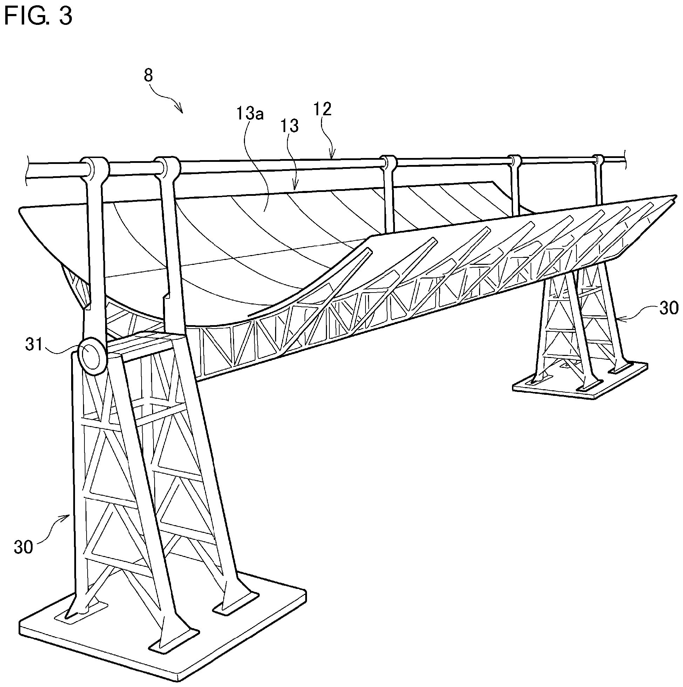

Fig. 3 is a schematic perspective view to explain the solar thermal collector 8. As shown in Fig. 3, the solar thermal collector 8 is provided with a stand 30 on the ground, and the heat collecting tube 12 and the reflecting plate 13 rotatably supported by the stand 30 around a rotational shaft 31. The solar thermal collector 8 is also provided with a rotating device that rotates the heat collecting tube 12 and the reflecting plate 13 around the rotational shaft 13 so as to follow the sun. The rotating device may be comprised of a hydraulic pump and a controller that controls the hydraulic pump.

The reflecting plate 13 may be made from a highly reflective mirror or metal plate (e.g., steel plate or aluminum plate). A reflecting surface 13a of the reflecting plate 13 is formed with a parabolic-cylindrical surface. In other words, the cross section of the reflecting surface 13a vertical to the rotational shaft 31 is is parabolic. The heat collecting tube 12 is a tube that extends straight parallel to the rotational shaft 31. The heat collecting tube 12 is covered by a vacuum glass tube for heat insulation. The heat collecting tube 12 is supported such that the center thereof is located at the focal point of the parabolic reflecting plate 13 in a cross section vertical to the direction of extension of the heat collecting tube 12. The sunlight reflected by the reflecting surface 13a is collected at the focal point of the reflecting plate 13 so that the heat collecting tube 12 located at the focal point can be heated efficiently.

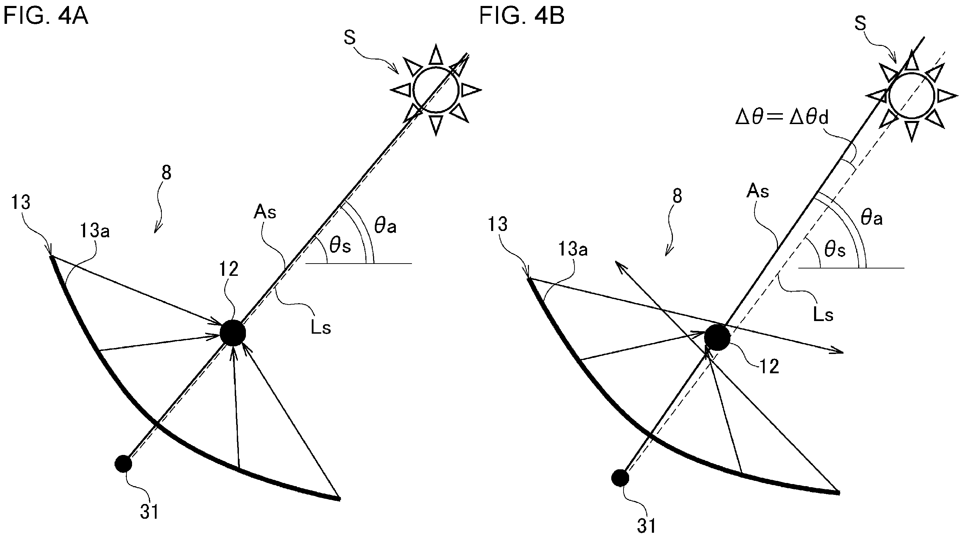

Figs. 4A and 4B are diagrams to explain a method of preheating the heat-collecting tube 12 according to the embodiment of the present invention.

Fig. 4A shows how the light is collected during a normal operation of heating the heat collecting tube 12 after a heat medium is introduced. As mentioned above, the heat collecting tube 12 and the reflecting plate 13 are supported so as to be rotatable around the rotational shaft 13. The reflecting surface 13a of the reflecting plate 13 is formed to be parabolic in a cross section vertical to the rotational shaft 31. The heat collecting tube 12 is located at the focal point of the parabolic reflecting surface 13a. Assuming a hypothetical axis of symmetry As of the reflecting surface 13a of the reflecting plate 13, the heat collecting tube 12 is located on the axis of symmetry As. Rotation of the heat collecting tube 12 and the reflecting plate 13 is controlled by the rotating device (not shown).

As shown in Fig. 4A, the rotating device rotates the heat collecting tube 12 and the reflecting plate 13 such that an angle θs of sunlight Ls from the sun S relative to the ground matches an angle θa of the axis of symmetry As of the reflecting plate 13 relative to the ground. This causes the heat collecting tube 12 and the reflecting plate 13 to be rotated to track the movement of the sun S. As shown in Fig. 4A, the sunlight Ls is collected in the heat collecting tube 12 located at the focal point of the parabolic reflecting surface 13a.

Fig. 4B shows how the light is collected during preheating for heating the heat collecting tube 12 before a heat medium is introduced. As shown in Fig. 4B, the rotating device rotates the heat collecting tube 12 and the reflecting plate 13 during preheating such that the angle θs of the sunlight Ls and the angle θa of the axis of symmetry As of the reflecting plate 13 differ. The rotating device rotates the heat collecting tube 12 and the reflecting plate 13 such that an angle difference Δθ between the angle θa of the axis of symmetry As and the angle θs of the sunlight Ls is equal to a predetermined angle difference Δθd. This rotates the heat collecting tube 12 and the reflecting plate 13 to follow the movement of the sun S with a delay of Δθd. If the angle θa of the axis of symmetry As and the angle θs of the sunlight Ls is displaced by Δθd, only a portion of the reflected light from the reflecting surface 13a is collected in the heat collecting tube 12, as shown in Fig. 4B.

If substantially the entire reflected light reflected by the reflecting surface 13a is collected in the heat collecting tube 12 by matching the angle θs of the sunlight Ls with the angle θa of the axis of symmetry As of the reflecting plate 13, as shown in Fig. 4A, while the heat medium is not introduced in the heat collecting tube 12, the heat collecting tube 12 will reach an extremely high temperature due to a boil dry condition and might be damaged. By displacing the angle θa of the axis of symmetry As and the angle θs of the sunlight Ls by Δθd, the level of light collection in the heat collecting tube 12 is inhibited so that the temperature of the heat collecting tube 12 is prevented from becoming extremely high and the heat collecting tube 12 is prevented from being damaged. The preheating method according to the embodiment only requires controlling the amount of rotation of the heat collecting tube 12 and the reflecting plate 13 and does not require adding other constituting elements. Thus, the method is much simpler and costs less than the method described above of inducing an electric current in the heat collecting tube for preheating.

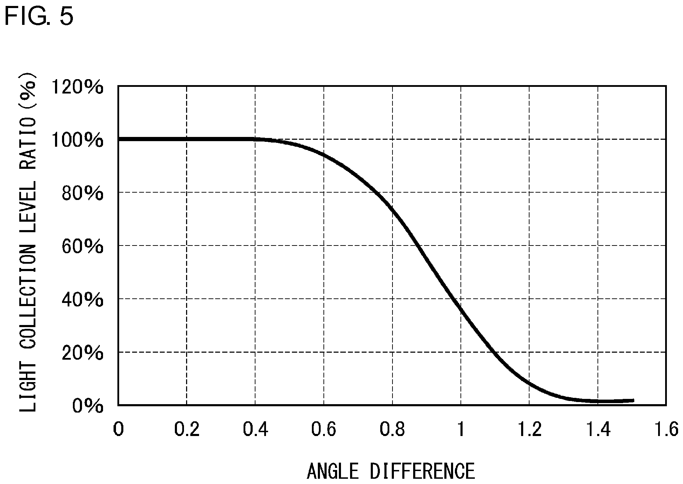

Fig. 5 is a graph showing an exemplary relationship between the angle difference and the light collection level ratio. Referring to Fig. 5, the horizontal axis represents the angle difference Δθ(°) between the angle θa of the axis of symmetry As and the angle θs of the sunlight Ls, and the vertical axis represents a light collection level ratio (%) with respect to the light collection level occurring when the the angle θa of the axis of symmetry As and the angle θs of the sunlight Ls are made to match.

The optimum value of the predetermined angle difference Δθd can be determined based on the relationship between the angle difference and the light collection level ratio shown in Fig. 5. If it is desired to set the light collection level ratio to 10%, for example, the angle difference Δθd may be set to about 1.2°. The light collection level ratio is preferably set to 5%∼20% and, more preferably, set to 8%∼12%.

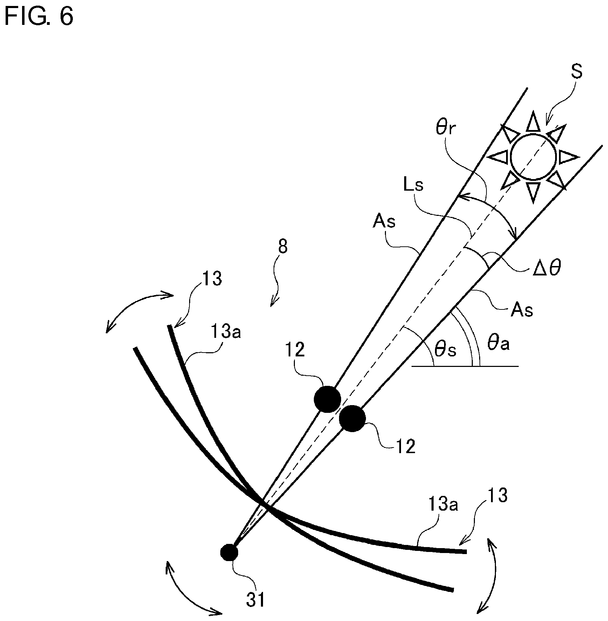

Fig. 6 is a diagram to explain a method of preheating the heat collecting tube 12 according to another embodiment of the present invention. In the above-described preheating method, the angle difference Δθ between the angle θa of the axis of symmetry As and the angle θs of the sunlight Ls is set to a fixed value. According to this embodiment, however, the rotating device rotates the heat collecting tube 12 and the reflecting plate 13, preheating the heat collecting tube 12, such that the angle difference Δθ between the angle θs of the sunlight Ls and the angle θa of the axis of symmetry As of the reflecting plate 13 varies within a predetermined angular range θr. In other words, the rotating device swings the heat collecting tube 12 and the reflecting plate 13 such that the angle θa of the axis of symmetry As of the reflecting plate 13 varies by ±θr/2 around the angle θs of the sunlight Ls.

The method of preheating the heat collecting tube 12 according to this embodiment helps avoid the sunlight being collected only in a limited portion of the heat collecting tube 12 by swinging the the heat collecting tube 12 and the reflecting plate 13 and so can preheat the entirety of the heat collecting tube 12. The preheating method according to the embodiment also only requires controlling the amount of rotation of the heat collecting tube 12 and the reflecting plate 13 and does not require adding other constituting elements. Thus, the method is much simpler and costs less than the related-art method. It is preferable that the the heat collecting tube 12 and the reflecting plate 13 be swung at a period shorter than 10 seconds. In this case, the heat collecting tube 12 is suitably prevented from being excessively heated locally.

Described above is an explanation based on an exemplary embodiment. The embodiment is intended to be illustrative only and it will be understood by those skilled in the art that various modifications to constituting elements and processes could be developed and that such modifications are also within the scope of the present invention.

### [DESCRIPTION OF THE REFERENCE NUMERALS]

8 solar thermal collector, 10 light collecting unit, 11 heat medium channel, 12 heat collecting tube, 13 reflecting plate, 30 stand, 31 rotational shaft, 100 solar thermal power generation system

### [INDUSTRIAL APPLICABILITY]

The present invention can be used in solar thermal collectors used in solar thermal power generation systems.

## Claims

1. A solar thermal collector comprising:
a heat collecting tube in which a heat medium is caused to flow;
a reflecting plate having a parabolic cross section that concentrates sunlight to the heat collecting tube; and
a rotating device that rotates the heat collecting tube and the reflecting plate around a rotational shaft, wherein
the rotating device rotates the heat collecting tube and the reflecting plate, when preheating the heat collecting tube before the heat medium is introduced, such that an angle of the sunlight relative to the ground and an angle of an axis of symmetry of the reflecting plate relative to the ground are different.

2. The solar thermal collector according to claim 1, wherein
the rotating device rotates the heat collecting tube and the reflecting plate, when preheating the heat collecting tube before the heat medium is introduced, such that an angle difference between the angle of the sunlight and the angle of the axis of symmetry of the reflecting plate differ is a predetermined angle difference.

3. The solar thermal collector according to claim 1, wherein
the rotating device rotates the heat collecting tube and the reflecting plate, when preheating the heat collecting tube before the heat medium is introduced, such that an angle difference between the angle of the sunlight and the angle of the axis of symmetry of the reflecting plate differ varies within a predetermined angle range.

4. A preheating method of a heat collecting tube comprised in a solar thermal collector in which a heat medium is caused to flow, the solar thermal collector further comprising a reflecting plate having a parabolic cross section that concentrates sunlight to the heat collecting tube, the preheating method comprising:
rotating the heat collecting tube and the reflecting plate such that an angle of the sunlight relative to the ground and an angle of an axis of symmetry of the reflecting plate relative to the ground are different; and
condensing the sunlight to the heat collecting tube by using the reflecting plate.
